# DEMANDE DE BREVET EUROPEEN

(11) **EP 0 654 382 A1**
(43) Date de publication de la demande: **24.05.1995**
(21) Numéro de dépôt: 94402402.5
(22) Date de dépôt: 26.10.1994
(51) Int. Cl.: B60R 25/00, B60R 25/10

(54) **Anti-démarrage électronique de véhicule**

(30) Priorité: 18.11.1993 FR 9313797
(71) Demandeur: SYSTEMES ETUDES SERVICE SA, F-92110 Clichy (FR)
(72) Inventeur: Laharie, Evelyne, née Perochain, F-75018 Paris (FR); Laharie, Jean-Claude, F-75018 Paris (FR); Lachieze, Destian, F-91650 Breuillet (FR)

(57) **Abrégé**

Cet appareil est un dispositif d'anti-démarrage électronique de véhicule (fig. 1), se présentant sous forme d'une centrale électronique à carte circuit imprimé (1), d'une antenne émettrice et réceptrice (2), d'un câble de liaison (3), d'un voyant lumineux (4), d'un vibreur sonore (5) et d'un circuit intégré auto-alimenté (6).
Le dispositif verrouille simultanément, deux éléments choisis parmi ceux qui sont indispensables au démarrage du véhicule, tant que le code du circuit intégré (6) n'a pas été reconnu par le circuit imprimé (1).

Application à la protection contre le vol des véhicules.

## Description

La présente invention concerne un dispositif empéchant tout véhicule d'être utilisé par une personne non autorisée, et donc d'être volé.

La nouveauté réside dans le fait que l'utilisateur n'a aucune manipulation a' faire pour être identifié et donc pour pouvoir démarrer son véhicule.

Les systèmes actuels peuvent être classés en trois familles.

Les alarmes qui avertissent qu'un véhicule est en train d'être forcé.

Les systèmes de reconnaissance des véhicules volés, qui permettent aux propriétaires de les retrouver une fois qu'ils ont été volés.

Les anti-démarrages, qui empêchent le vol.

Parmi les anti-démarrages, il existe plusieurs dispositifs, qui fonctionnent sur le même principe, à savoir que l'utilisateur du véhicule doit être autorisé à démarrer par un système de reconnaissance, soit en tapant un code sur un clavier, soit en enfichant une prise "jack" codée, soit en actionnant une télécommande à infrarouge qui véhicule un code, soit en tournant une clé électronique.

Le dispositif selon l'invention cumule la fonction de n'importe lequel de ces anti-démarrages et celle de la reconnaissance à distance qui permet à l'utilisateur autorisé de n'avoir aucune manipulation à faire pour être détecté et reconnu par le système.

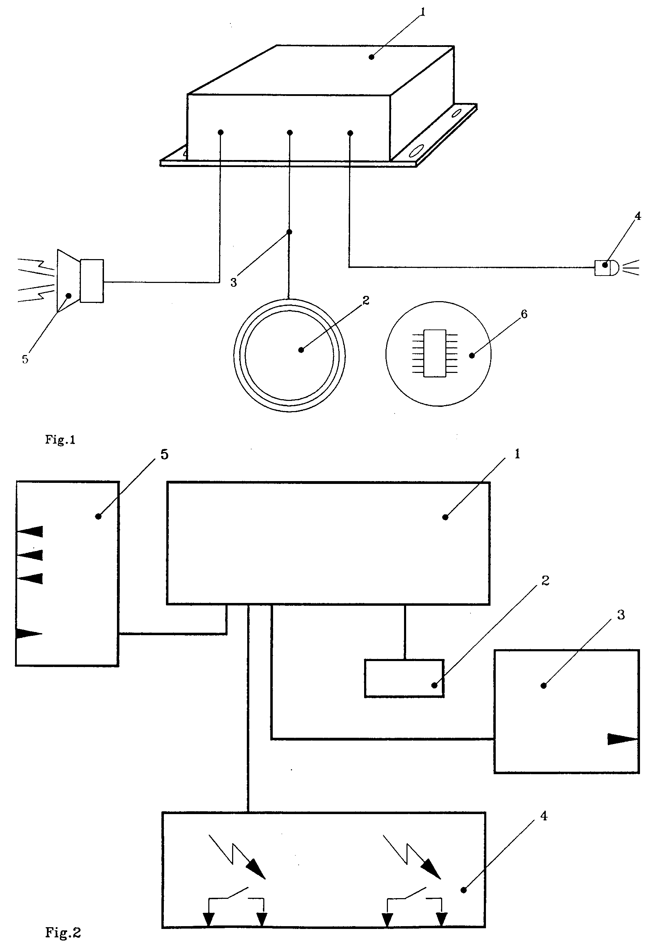

La figure 1 représente une vue de dessus du dispositif selon l'invention.

Selon la figure 1, le dispositif comprend un circuit intégré auto-alimenté (6), placé dans le porte-clé de l'utilisateur, qui émet un code confidentiel.

L'antenne (2) émet un champ magnétique qui auto-alimente en énergie le circuit intégré (6).

Quand l'utilisateur met le contact pour faire démarrer son véhicule, ou même, des. l'ouverture d'une portière, son code personnel est émis par le circuit intégré (6), puis capté par l'antenne (2) qui le transmet à la centrale (1) pour identification.

Le microprocesseur qui gère la centrale (1) a en mémoire le code de l'utilisateur. Il le compare avec le code reçu.

Si c'est le bon code, la centrale déverrouille les deux coupures d'alimentation qu'elle surveille, et qui permettent au véhicule de démarrer, comme l'alimentation en carburant, en électricité, le démarreur.

Sinon, le véhicule ne peut démarrer et la centrale envoie un signal qui déclenche une sirène, ou tout autre dispositif hors du domaine de la présente invention, comme une alarme par exemple.

La figure 2 représente le synoptique du fonctionnement de la centrale (1).

La centrale figure 2 comprend une carte circuit imprimé sur laquelle sont implantés : un microprocesseur (1), une mémoire de code non volatile (2), le circuit de commande de l'antenne (3), les interfaces d'entrées-sorties vers le véhicule (5) avertisseur sonore, sirène, portières, vibreur sonore, diode électro-luminescente et deux relais pour les coupures de sécurité (4).

Le circuit intégré (6) de la figure 1 se trouve de préférence dans le porte-clé du conducteur, sans que ce soit une obligation, et l'antenne émettrice-réceptrice (2) est placée à proximité du contact du véhicule donc du porte-clé.

Aucune intervention manuelle n'est nécessaire dans l'opération.

Le dispositif, selon l'invention, est destiné à la protection des véhicules contre le vol.

## Revendications

1. Dispositif anti-démarrage pour véhicule, caractérisé en ce que le code personnel de l'utilisateur est reconnu sans aucune manipulation grâce à l'émission d'un circuit intégré autoalimenté par une antenne.

2. Dispositif selon la revendication 1, caractérisé en ce qu'il comporte une centrale (1) reliée à une antenne émettrice-réceptrice (2) par un câble (3), un circuit intégré auto-alimenté (6), un voyant lumineux (4) et un vibreur sonore (5).

3. Dispositif selon la revendication 1, caractérisé en ce que le système verrouille deux alimentations choisies parmi tous les éléments qui permettent aux véhicules de démarrer, comme l'alimentation en carburant, en électricité, le démarreur etc...
